# EUROPEAN PATENT SPECIFICATION

(11) **EP 4 581 655 B1**
(45) Date of publication and mention of the grant of the patent: **04.11.2026**
(21) Application number: 23768181.2
(22) Date of filing: 01.09.2023
(51) Int. Cl.: G02F 1/1524, G02B 5/20, C01B 32/174, C01B 32/205, G02B 5/22, H01G 11/36

(54) **DEVICES FOR NEAR-INFRARED SIGNATURE REDUCTION**
GERÄTE ZUR REDUZIERUNG DER NAHINFRAROTSIGNATUR
DISPOSITIFS DE RÉDUCTION DE LA SIGNATURE DANS LE PROCHE INFRAROUGE

(30) Priority: 02.09.2022 GB 202212823
(43) Date of publication of application: 09.07.2025
(73) Proprietor: Advanced Material Development Limited, Surrey GU2 7YG (GB)
(72) Inventor: DALTON, Alan, Guildford, Surrey GU2 7YG (GB); LYNCH, Peter, Guildford, Surrey GU2 7YG (GB); OGILVIE, Sean, Guildford, Surrey GU2 7YG (GB)
(74) Representative: Schlich
(86) International application number: PCT/EP2023/074038
(87) International publication number: WO 2024/047231

(56) References cited:
- WO-A1-2018/128906
- CN-A- 104 715 934
- US-A1- 2011 183 180
- US-A1- 2011 287 316
- US-A1- 2014 175 281
- US-A1- 2017 062 141
- US-A1- 2017 278 643
- US-A1- 2018 174 766
- US-A1- 2018 342 357

## Description

This present invention relates to devices with switchable near-infrared emissivity containing carbon nanomaterials and transition metal oxides, methods of making such devices and applications of the devices.

### Background to the Invention

The active control of thermal radiation into, and out of, objects and structures and exterior surfaces is important for a range of industrial applications which require the management of a thermal signatures to assist in the overall heat efficiency and heat loss. For some applications, such as thermal regulation of buildings, it is desirable to reduce and control the near infra-red reflectance and absorbances commensurate with solar radiation profiles to reduce the energy costs of heating and cooling. For example, passive coatings made with materials with tunable properties, such as transparency, infra-red / near infra-red (NIR) reflectivity and/or emissivity, may be useful in thermal windows and emissive temperature control.

Active switchable electrochromic and thermochromic devices which allow visible light to pass, but absorb or reflect near infra-red radiation, is attractive to satisfy the needs of modern heating, ventilation and air conditioning (HVAC) systems. These devices can be incorporated into glazing products when integrated as large area devices. By applying an electrical potential, the properties maybe modulated in such a way that the transparency and reflectivity maybe controlled. The use of active coatings which incorporate nanomaterials can greatly assist in the performance of such devices.

Carbon nanotubes are nanosized tubes constructed from rolled sheets of graphite. The tubes typically have a diameter in the range of 1 to 50 nanometres, but can have lengths in the micrometre range. Carbon nanotubes can be either single-walled (i.e. formed from a single rolled sheet of graphene) or multi-walled (i.e. formed from a plurality of concentric rolled sheets of graphene). Carbon nanotubes have attracted great interest due to their physical properties - namely their high tensile strength and high electrical conductivity.

2D materials are known to have many interesting and potentially useful properties, which differ from the properties of the corresponding bulk 3D material. For example, graphene is highly conductive and has applications in electrode structures as well as in conductive composites. The interesting functional properties of many materials are often only observed when the materials are in their mono- or few-layer (i.e. 2D) forms. However, to make use of these nanocarbon properties, convenient methods of isolating these forms are required. The strong interlayer dispersion forces must be overcome in order to exfoliate bulk three-dimensional (3D) materials to form the corresponding 2D materials. Liquid phase exfoliation and dispersion using high shear mixing is an accessible route towards producing formulated inks containing 2D materials which find uses in many industrial applications.

Salihoglu et al., Nano Lett. (2018), 18, 4541-4548 describes a graphene-based adaptive thermal camouflage device comprising a layer of graphene, a layer of a polyethylene membrane soaked with an ionic liquid and a layer of a gold electrode to form a planar capacitor. The graphene was deposited using a chemical vapour deposition technique, which does not easily lend itself to large scale production in the same manner that a liquid-based and printable nanocarbon layer would. US 2014/0175281 A1 discloses electrochromic devices comprising SWNT films and electrolyte layers. WO 2018/128906 A1 discloses electrochromic devices and metal oxides. US 2017/0062141 A1, CN 104715934 A, US 2011/0183180 A1, US 2011/0287316 A1, US 2018/0342357 A1, US 2018/0174766 A1, US 2017/0278643 A1 are mainly directed to electrochemical energy-storage devices, such as supercapacitors, ultracapacitors or rechargeable power sources, and are not concerned with active modification of Near-Infrared radiation. US 2011/0226738 A1 relates to transparent structures and electrochromic devices configured to block or control near-infrared or infrared radiation.

There therefore remains the need for devices for NIR radiation control, preferably those with improved properties, including improved scalability (for example, areal scalability).

### Summary of the Invention

Electrically switchable phase transition materials, especially metal-insulator materials (MITs) are suited towards incorporation into electrochemical capacitor structures. By combination of these materials with nanocarbon electrodes, a switchable device can be made which controls the absorbance of near-infra-red radiation (NIR) from solar radiation sources.

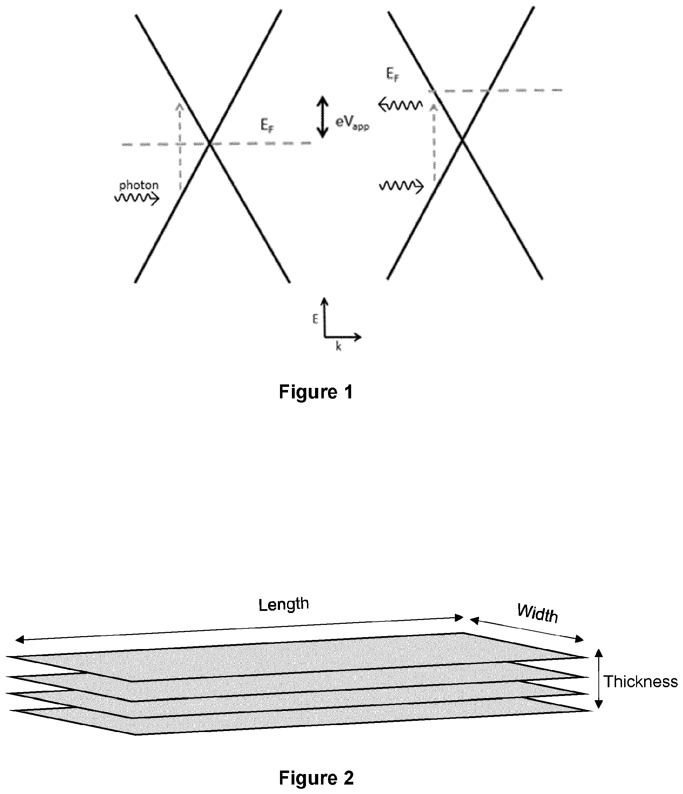

Without wishing to be bound by theory, the inventors believe that an NIR electrochromic device comprising nanoparticulate graphite/graphene and/or carbon nanotubes can use the principle of Pauli Blocking to modify the band structure of graphene to block state transitions (see Figure 1). The band structure of graphene can be simplified and represented as a Dirac cone in which energy (E) is linear with momentum (k). In the ground state the Fermi Level, the state below which all states are occupied at absolute zero, rests close to the point of the cones. An incident photon would then cause excitation of an electron into an empty state causing an absorption event (Figure 1 - left). The Fermi level can be raised causing the occupancy of more states. If the same photon then interacts with the modified graphene the electron cannot be excited due to there being no available unoccupied state (Figure 1 - right).

This allows a graphene-based or carbon nanotube-based device that can have an emissivity of NIR radiation tuned by adjusting the Fermi level by applying a potential bias or by doping.

Large area devices of this type (when constructed using nanocarbon electrodes in planar electrolytic capacitors and integrated onto a suitable substrate) act to reduce the apparent emissivity of a thermal body. It has been found that devices made from nanocarbon materials are able to lower their emissivity due to their inherent electronic and resulting phonon effects when powered.

For large area devices, it is preferable for the fabrication method to be solution-based (rather than, for example, based around the transfer of ultra-thin film CVD deposited graphene). The construction of the electrolytic capacitor device also requires elements of a thin porous membrane separator and a liquid ionic electrolyte to be developed such that fast switching times and large observable differences can be obtained. Nanocarbon materials also exhibit a large surface area to volume ratio which assists the accumulation of charge on local surfaces. The operating range and switching times of these devices therefore are also driven by the physical properties of the electrolyte and the diffusivity into the internal structure of the electrode.

To enable the device's low power consumption and large area operation, it is preferred that the electrode film's internal resistive losses are minimised as far as possible by the use of conductive carbon nanomaterials (for example carbon nanotubes and/or graphite nanoplatelets).

Some transition metal oxides display a metal-to-insulator transition (MIT). Without wishing to be bound by theory, the inventors note that generally metals are reflective to near infrared (NIR) radiation as the nearly free electrons in the metal screen the electric field of the impinging electromagnetic energy below the plasmon frequency. The plasmon frequency is determined by carrier density, the number of electrons present, and the effective mass of the electrons, determined by band structure relationships. Contrastingly, an insulator is transparent to NIR radiation due to a large bandgap which forbids optical transitions in the visible and NIR parts of the spectrum. As a consequence, materials that display an MIT (such as some transition metal oxides), have a variable emissivity of thermal radiation in the NIR region. An example of such transition metal oxides are vanadium oxides with variable stoichiometries (i.e. VₓO_{y}, wherein x and y are integers, typically selected from 1, 2 and 3).

The inventors have found that adding one or more transition metal oxides displaying an MIT to an electrode, in addition to carbon nanotubes, improves the ability to modify NIR radiation of a device due to the strong "on/off" response of transition metal oxides in the NIR region.

Accordingly, in a first aspect, the invention provides a device for active modification of NIR radiation, as disclosed in claim 1.

The one or more electrodes may comprise additional carbon nanomaterials, in addition to carbon nanotubes. For example, the electrodes may comprise carbon nanotubes together with graphite nanoplatelets (also referred to as few-layer graphene).

The two or more electrodes are deposited onto the surface of at least one or the one or more polymeric membranes.

Preferably, the device comprises a pair of electrodes. The electrodes may both comprise carbon nanotubes (and optionally additional carbon nanomaterials as described herein). The electrodes may both comprise a transition metal oxide. Alternatively, when more than one electrode is present, the electrodes may be formed from different materials and only one of the electrodes may comprise the transition metal oxide.

The device also comprises a protective encapsulation layer, which protects the electrodes and polymeric membranes from damage and/or degradation. This layer is preferably NIR transparent so as not to interfere with the optical (e.g. emissivity) properties of the device.

The protective encapsulation layer may be flexible and polymeric in nature. The protective layer may prevent water vapour and/or oxygen molecules from diffusing into the device, which reduces device lifetimes by facilitating unwanted chemical reactions. This layer is affixed onto the device and then sealed for operation.

The electrodes are typically deposited onto the polymeric membrane(s) such that the electrodes are in contact with polymeric membrane(s) to allow ionic/electron transport from the polymeric membrane(s) to the electrodes. These polymeric membrane(s) serve as separators to prevent electrical shorting between the electrodes. When a potential difference is applied to the pair of electrodes, the occupation of electrons in the Fermi level of the carbon nanotubes (or other carbon containing materials) of the electrodes can be adjusted and therefore the NIR emissivity of the device can be altered. Applying a potential difference across the electrodes may additionally initiate a MIT in the transition metal oxide of the electrode, further altering the NIR emissivity of the device.

As described above, the devices can be used for the active modification of thermal radiation. This may include modulating the transparency and/or reflectance of the device or the emissivity of the device.

Surfaces of controlled reflectivity and emissivity allow the thermal control by changing heat loss due to radiation. The heat loss due to radiation is proportional to the emissivity of the surface and the temperature differential to the power of four (4). As such, the invention presents an avenue to controlling the temperature of computer components with minimal power consumption. This is of particular use in environments where convection and conduction are not appropriate.

Another example of this is the reduction of heat loss within glazing products. Glass exhibits a high emissivity and thus radiates heat readily. By lowering the outer emissivity relative to the environment, heat loss can be reduced. The devices of the invention are therefore able to be either integrated within glazing laminates or affixed as an outer laminate.

When a device according to the invention is positioned between a thermally radiating object and a detector, the thermal radiation detected by the detector is reduced. The devices of the invention can therefore effectively block thermal radiation in the NIR range from heat sources and therefore can act as thermal camouflaging devices. The devices for active modification of thermal radiation can therefore also be considered to be devices for camouflaging/concealing/masking/obscuring/suppressing thermal radiation.

Accordingly, the invention also provides a method of actively modifying (e.g. camouflaging/concealing) thermal or NIR radiation from an object, the method comprising placing a device as described herein between the object and a thermal/NIR radiation detector. The method may include covering or surrounding the object with a device as described herein. A further example of this is for the protection of sensitive near infra-red detector devices which are used for astronomical observation.

The devices can be formed by depositing (e.g. printing or spraying) an ink containing the carbon nanomaterials and/or transition metal oxide onto one or onto a pair of polymeric membranes. The polymeric membranes(s) are typically infused with the ionic liquid. To achieve this, the polymeric membrane may be formed as a porous membrane and then, following its formation, the ionic liquid may be applied to (e.g. soaked into) the porous membrane such that it infiltrates into the pores therein. The polymeric membrane(s) can be infused with the ionic liquid before or after the electrodes are deposited onto the membrane. Alternatively, the polymeric membrane may be co-cast with the ionic liquid to form the infused polymeric membrane.

Accordingly, the embodiment, not forming part of the invention, also provides a method of making a device as described herein, the method comprising:
(a) optionally depositing a liquid composition comprising carbon nanotubes onto a first and/or second polymeric membrane;
(b) depositing a liquid composition comprising carbon nanotubes and a transition metal oxide (and optionally graphite nanoplatelets) onto at least one (e.g. both) of a first and second polymeric permeable membrane and/or onto the liquid composition comprising carbon nanotubes, in order to form a film comprising carbon nanotubes and a transition metal oxide (and optionally graphite nanoplatelets) on the membranes;
(c) impregnating the first and second polymeric membrane with an ionic liquid; and
(d) securing the first and second polymeric membranes to each other.

Alternatively, the polymeric membranes comprising the ionic liquid may be formed before the liquid composition comprising carbon nanomaterials and a transition metal oxide is printed onto the polymeric membrane. Accordingly, the embodiment, not forming part of the invention, also provides a method of making a device as described herein, the method comprising:
(a) forming first and second polymeric permeable membranes comprising an ionic liquid;
(b) optionally depositing a liquid composition comprising carbon nanotubes onto a first and/or second polymeric permeable membrane;
(c) depositing a liquid composition comprising carbon nanotubes and a transition metal oxide (and optionally graphite nanoplatelets) onto at least one (e.g. both) of the first and second polymeric membranes and/or onto the liquid composition comprising carbon nanotubes, in order to form a film comprising carbon nanotubes and a transition metal oxide (and optionally graphite nanoplatelets); and
(d) securing the first and second polymeric membranes to each other.

Step (a) may comprise impregnating the polymeric permeable membranes with the ionic liquid or co-casting the membranes from a polymer and the ionic liquid.

The invention also provides a method of making a device as described herein, the method comprising:
(a) providing a substrate;
(b) depositing a first liquid composition comprising carbon nanotubes (and optionally graphite nanoplatelets) onto the substrate to form a first electrode;
(c) optionally depositing a second liquid composition comprising carbon nanotubes onto the first electrode;
(d) depositing a liquid comprising a polymer and an ionic liquid onto the first electrode or second liquid composition to form a polymeric permeable membrane comprising the ionic liquid;
(e) optionally depositing a further second liquid composition comprising carbon nanotubes onto the polymeric permeable membrane; and
(f) depositing a third liquid composition comprising carbon nanotubes (and optionally graphite nanoplatelets) onto the polymeric permeable membrane or further second liquid composition to form a second electrode;
wherein the first and/or the third liquid composition additionally comprises a transition metal oxide.

Alternatively, the carbon nanotubes and transition metal oxide may be deposited in separate steps to form distinct sublayers. Therefore, references herein to depositing a liquid composition comprising carbon nanotubes and a transition metal oxide may optionally be replaced with a two-step process comprising first depositing a liquid composition comprising carbon nanotubes and then deposition a liquid composition comprising a transition metal oxide or vice versa.

The methods above may also comprise the steps of securing the first and second polymeric membranes to a substrate and/or applying a protective encapsulation layer to the polymeric membranes.

The invention additionally provides devices obtained according to the methods described herein.

### Detailed Description of the Invention

The term "carbon nanomaterials" or "nanocarbon" as used herein refers to nanomaterials (i.e. materials having an average size from 1nm to 100nm in at least one dimension) that comprise or consist of carbon. Typically, the carbon nanomaterials comprise at least 90% or more by weight, preferably at least 95% or more by weight, for example 99% or more by weight of carbon. The term includes materials such as graphene, graphite nanoplatelets, single-walled carbon nanotubes, multi-walled carbon nanotubes, crystalline diamond, and diamond-like carbon (see the following ISO standard: ISO/TS 80004-3:2020).

As discussed above, the electrodes comprise carbon nanotubes (preferably single-walled carbon nanotubes). At least one electrode comprises a transition metal oxide. One of more of the electrodes may also comprise graphite nanoplatelets.

For the electrode(s) that contain both carbon nanotubes and a transition metal oxide, the carbon nanotubes and transition metal oxide particles may be intimately mixed to form a homogenous electrode comprising both the nanotubes and metal oxide. Alternatively, the electrode may have a layered structure comprising a sublayer comprising the nanotubes and a sublayer comprising the metal oxide. In other words, the electrodes may have distinct sublayers one which has a greater proportion of (or contains only) the carbon nanotubes and another which has a greater proportion of (or contains only) the metal oxides. In this arrangement, depositing a metal oxide layer onto the carbon nanotube layer provides electrical contact between the metal oxide and nanotubes, without the components having to be intimately mixed.

The phrase "one or more electrodes comprising carbon nanotubes and a transition metal oxide" as used herein covers all such arrangements (including those where the carbon nanotubes and metal oxides are intimately mixed and those where they are present in sublayers).

In embodiments where there are two or more electrodes, one or more electrodes will comprise a transition metal oxide. For example, in an embodiment where there are two electrodes, there may be one electrode comprising carbon nanotubes and a transition metal oxide, and a second electrode comprising carbon nanotubes but no transition metal oxide. In an alternative embodiment where there are two electrodes, both electrodes may contain a transition metal oxide as well as carbon nanotubes. In preferred embodiments with two electrodes, one electrode will comprise carbon nanotubes and a transition metal oxide, and a second electrode will comprise carbon nanotubes but no transition metal oxide.

The carbon nanotubes may be single-walled carbon nanotubes or multi-walled carbon nanotubes, but preferably comprise or consist of single-walled carbon nanotubes. The carbon nanotubes may be metallic carbon nanotubes or semiconductor carbon nanotubes. The carbon nanotubes typically have an outer mean diameter of from 0.5nm to 5nm, such as from 1nm to 5nm, preferably from 1nm to 2nm (as determined by transmission electron microscopy) and may have a length of greater than 3µm, typically greater than 5µm, for example greater than 10 µm or greater than 15µm. Whereas the nanoplatelets described below are micron-sized in two dimensions, carbon nanotubes are only micron-sized in a single dimension (i.e. along their length).

The carbon nanotubes may be chirally selected such that they are semiconducting. The chirality of carbon nanotubes can be indicated using the pair of integers m and n as the chiral index. For chiral nanotubes, n ≠ m. For use in the present invention, the chiral index integers m and n also typically meet the criteria of n - m ≠ k*3 (where k is an integer > 0). Combinations of chirality within the carbon nanotubes used in the invention are preferred as this instils a semiconducting nature to the nanotubes.

The transition metal oxide is any transition metal oxide that displays a metal-to-insulator transition (MIT). The transition metal oxide displays a MIT in the near infra-red region of the electromagnetic spectrum (i.e. in the region from approximately 780nm to 2500nm). Suitable transition metal oxides may include vanadium oxides (VOx), niobium oxides (NbOx), hafnium oxides (HfOx), cobalt oxides (CoOx), molybdenum oxides (MoOx), indium tin oxides (varying compositions) and titanium oxides (TiOx) wherein x may be an integer or non-integer value from 1 to 5, preferably from 1 to 3. In preferred embodiments, the transition metal oxide is a vanadium oxide, e.g. selected from V₂O₃, VO₂, V₂O₅.

The transition metal oxide may optionally be doped. For example, the transition metal oxide may be doped with Cr. The transition metal oxide may optionally be alloyed. For example, the transition metal oxide may be alloyed with La, Sr or K. Doping and/or alloying of the transition metal oxide may lead to a shift in the potential difference required to initiate a MIT.

The transition metal oxides may be added to the composition or present in the electrodes as particles having a mass median diameter of 100µm or less, typically 20µm or less, for example 10µm or less or 1µm or less. Preferably, the particles have a mass median diameter of 10nm or greater, 50nm or greater or 80nm or greater and of 500nm or less or 200nm or less. For example, the particles may have a mass median diameter of from 50nm to 500nm, for example from 80nm to 200nm. The particle diameters of the metal oxides may be measured dynamic light scattering,

In some embodiments, more than one transition metal oxide is present in the electrode / in the liquid composition deposited to form an electrode. In embodiments where more than one transition metal oxide is present, it is preferred that all transition metal oxides present display a MIT.

The term "graphite nanoplatelets" as used herein (also referred to herein as "graphene nanoplatelets") refers to nanoparticles of graphite which consist of small stacks of graphene. The term graphite nanoplatelets refers to nanoplatelets having on average 20 or fewer layers, typically 15 layers or fewer, preferably 10 or fewer layers. Layer numbers can be determined by UV-vis spectroscopy (see C. Backes et al., 'Spectroscopic metrics allow in-situ measurement of mean size and thickness of liquid-exfoliated graphene nanosheets', Nanoscale, 2016, doi: 10.1039/C5NR08047A).

The nanoplatelets typically have an average thickness of less than 30nm, for example less than 20nm. The term "thickness" as used herein refers to the dimension of the nanoplatelets along the axis of stacking of the layers within the nanoplatelets. The terms "length" and "width" refer to the longer and shorter dimensions of the nanoplatelets along perpendicular axes in the plane of the sheets of the layered materials respectively (see Figure 2).

The nanoplatelets typically have an average length and/or width of 30nm or greater, preferably 50nm or greater or 100nm or greater. The nanoplatelets typically have an average length and/or width of 10µm or less, typically 3.0µm or less, for example 2.0µm or less, typically 1.5µm or less, preferably 1µm or less, for example 800nm or less. In some instances, dependent on specific exfoliation processes of these materials, graphite nanoplatelets have larger lateral dimensions that are greater than 1 µm and less than 50 µm. The number vs size distributions of these materials may be broad or narrow depending on the exfoliation technique employed and/or any subsequent size selection process.

The dimensions of the nanoplatelets can be measured using scanning or transmission electron microscopy. The nanoplatelets are typically only micron-sized in up to two dimensions (i.e. their length and width, with their thickness being significantly less than 1µm, for example less than 100nm). These dimensions are preferably measured by transmission electron microscopy.

When present, the graphite nanoplatelets are typically present in the electrodes in an amount of from 25% (w/w), preferably from 30% (w/w), for example from 35% (w/w) and up to 50% (w/w), preferably up to 45% (w/w), for example up to 40% (w/w).

When the electrodes comprise a mixture of carbon nanotubes and graphite nanoplatelets, the carbon nanotubes may be present in the electrodes described herein in a weight ratio relative to the amount of graphite nanoplatelets of greater than 0.15:1 (carbon nanotubes:graphite nanoplatelets), preferably greater than 0.2:1 and in a ratio of up to 1:1, suitably up to 0.7:1, preferably up to 0.6:1.

For example, the carbon nanotubes are typically present in the electrodes in a weight ratio relative to the amount of graphite nanoplatelets of from 0.15:1 to 0.6:1 (carbon nanotubes:graphite nanoplatelets), preferably in a ratio of from 0.4:1 to 0.5:1.

Alternatively, the quantity of carbon nanotubes in the electrodes may be defined relative to the weight of the total composition. The carbon nanotubes are typically present in the electrodes composition in an amount of from 5% (w/w), preferably from 10% (w/w), for example from 15% (w/w) and up to 30% (w/w), preferably up to 25% (w/w), for example up to 20% (w/w).

When the electrodes comprise carbon nanotubes as the only carbon nanomaterial, the carbon nanotubes may be present in the electrodes in an amount of 50% or greater, preferably 75% or greater by weight, such as 90% or greater by weight, for example 95% or greater by weight.

In embodiments containing a transition metal oxide in the electrode, the transition metal oxide is typically present in an amount of from 0.01% (w/w) to 40% (w/w) of the total liquid composition.

For electrodes comprising a mixture of carbon nanotubes and a transition metal oxide, the carbon nanotubes may be present in the electrodes in a weight ratio relative to the amount of transition metal oxide of from 2:98 to 2:8 (carbon nanotubes:transition metal oxide).

For electrodes comprising both a transition metal oxide and graphite nanoplatelets, the transition metal oxide may be present in the electrodes in a weight ratio relative to the amount of graphite nanoplatelets of from 2:8 to 1:1 (transition metal oxide:graphite nanoplatelets).

For electrodes comprising a mixture of carbon nanotubes, a transition metal oxide and graphite nanoplatlets, the weight ratio of carbon nanotubes:transition metal oxide:graphite nanoplatelets of 1:94:5 - 1:8:1.

In the devices described herein, the electrodes typically have a thickness of from 10nm to 750nm, typically from 20nm to 500nm, for example from 50nm to 250nm.

The electrodes are typically deposited onto the polymeric membrane from a liquid composition (or "ink"). For example, liquid compositions comprising the carbon nanomaterials, transition metal oxide and a solvent (and optionally other thickening agents, binders and other additivities described below) can be sprayed or printed onto the polymeric membrane.

The solvent may be an aqueous or non-aqueous solvent. However, the solvent preferably is or comprises water (necessary for hydrogel formation). Alternatively, the solvent may be a dipolar aprotic solvent. Examples of such dipolar aprotic solvents include cyclopentanone, cyclohexanone, N-methylpyrrolidone (NMP), dimethylformamide (DMF), dimethylsulphoxide (DMSO), dimethylacetamide (DMAc), sulpholane, dihydrolevoglucosenone (Cyrene) and lactones, such as gamma-valerolactone. When gamma-valerolactone is present, it may be present in the liquid compositions in amount of from 1% to 10% (w/w), for example up to 5% (w/w) or from 5% (w/w) to 10% (w/w), preferably from 6% to 10% (w/w).

The liquid compositions (containing carbon nanotubes and optionally additional carbon nanomaterials) may also include a thickening agent (which may also act as gelification agents) to increase the viscosity of the compositions. The increased viscosity ensures that the compositions are suitable for printing and also reduces tendency of the carbon nanomaterials to flocculate from suspension.

The thickening agent is preferably a hydrogel-forming thickening agent. The formation of a hydrogel matrix containing carbon nanotubes and additional carbon nanomaterials (for example, graphite nanoplatelets) results in a highly electrically conductive ink. The hydrogel-forming thickening agents are generally hydrophilic polymer chains which form a colloidal gel through hydrogen-bonding in water.

Examples of suitable thickening agents include:
- cellulose derivatives, such as carboxymethyl cellulose (CMC), methyl cellulose, hydroxy ethyl cellulose and carboxy ethyl cellulose, and salts thereof (such as sodium salts thereof);
- polymers such as polyethylene oxide (PEO), polypropylene oxide (PPO); polyanaline (PANI), polyvinylpyrrolidone (PVP), polyvinyl alcohol (PVA) and poly *N*-isopropylacrylamide (PNIPAAm);
- cyclodextrins;
- natural gelification agents such as xanthan gum, gelatine, glycerol, alginates, chitosan;
- inorganic silicas and clays such as bentonite, montmorillonites, laponite, nano-silica and titania; and
- filamentous or rod-like materials, for example those having an aspect ratio of greater than 100 (e.g. carbon nanotubes).

In a preferred embodiment, the thickening agent is a cellulose derivative, such as carboxymethyl cellulose. The term cellulose derivate as used herein refers to chemical derivatives of cellulose formed by functionalisation of some or all of the hydroxyl groups present in cellulose (for example via etherification or esterification reactions). Derivatives can be formed by incorporation of one or more or all of carboxy, hydroxy, methyl, ethyl and/or propyl groups. Examples of cellulose derivatives include hydroxypropyl methylcellulose, hydroxypropyl cellulose, methyl ethyl cellulose, methyl cellulose and carboxymethylcellulose or a combination thereof, as well as cellulose itself. CMC is available in several forms (e.g. varying by degree of substitution and function) and can be crosslinked with several chemical agents either covalently or through hydrogen bonding networks with other agents to impart new properties which can be tailored according to requirements (Gels 2018, 4, 54; doi:10.3390/gels4020054).

Cellulose derivatives readily form hydrogels which are utilised in many industrial applications. These materials may also act as surface-active agents which stabilise nanocarbon materials in aqueous solvents. Hydrogels exhibit ideal thixotropic behaviour due to their extended hydrogen bonding or supramolecular network formation behaviour. These networks serve to provide long range ordering to improve rheological behaviour.

The total concentration of the thickening agents may be in the range of 0.5% to 2% by weight of the total liquid composition (including the solvent), for example from 1% to 1.75% by weight of the total liquid composition.

The thickening agent increases the viscosity of the composition and it is envisaged that it also enables the carbon nanotubes to form a pre-ordered supramolecular network, which increases the conductivity of electrodes printed from the composition.

The viscosity of the composition is important to ensure that it can be printed to form a film. In addition, the composition should be viscous enough to prevent flocculation of the carbon nanomaterials within the composition. The precise viscosity will of course depend on the application of the composition (and the resulting film). The thickening agent also ensures that the inks have a viscosity suitable for printing, e.g. screen printing. The inks suitable for screen-printing are typically thixotropic and therefore their viscosity is dependent on shear rate. The liquid compositions (containing the carbon nanotubes, transition metal oxide and optionally additional carbon nanomaterials) may have a viscosity of from 100 to 1000 Pa.s at a shear rate of 0.1/s and/or may have a viscosity of from 1 to 10 at a shear rate of 100/s.

The liquid compositions may also include one or more surfactants. The surfactants are typically non-ionic surfactants. Examples of suitable non-ionic surfactants include polyethylene oxide-based (PEO) surfactants (e.g. Triton X-100), polypropylene oxide-based (PPO) surfactants, cyclodextrins and polyvinyl pyrrolidone (PVP) surfactants. However, ionic surfactants, such as sulphate-based surfactants (such as sodium dodecyl sulphate) may also be used.

The total concentration of the surfactants may be in the range of 0.01% to 1% or 0.01% to 0.1% by weight of the total composition (including the solvent), for example from 0.02% to 0.05% by weight of the total composition.

The compositions may also comprise one or more solvents and or adhesives in order to improve adhesion of the dried film (formed by printing the ink) to a substrate. The nature and combinations of adhesives will of course be dependent on the substrate.

The compositions may also comprise one or more cross-linking agents in order to improve the rheological parameters of the ink and/or properties of resulting films. This may include a wide range of functional organic acids or bases such as ascorbic acid. Examples of further cross-linking agents include di- and tri-carboxylic acids, such as glutaric acid and trimesic acid. This crosslinking serves to stabilise films from rapid redissolution and effects of ambient humidity on conductivity.

The compositions may also comprise one or more humectants to aid the printability of the inks within industrial processes. In aqueous based compositions, the addition of urea, glycerin, or glycols such as polypropylene glycol slows the ink drying process such that constant and repeatable printing can be obtained.

In addition, the compositions may further comprise a setting (cross-linking) agent, which is a material that cures upon exposure to heat or radiation to cure and set the liquid ink compositions into a solid film. These include photocurable monomers or infra-red activated agents, e.g. epoxides (which may undergo ring opening reactions), aldehydes or acids (which may undergo esterification reactions) such as citric acid.

Alternatively, films formed with binders containing mono-valent ions, such as sodium carboxymethyl cellulose, may be treated with aqueous solutions of bi, tri or tetra valent ionic salts such as Calcium (II) Chloride or Iron (III) Sulphate to form ionically-cross-linked insoluble films by a process of ion exchange.

The carbon nanomaterial-containing liquid compositions are deposited on a polymeric membrane as electrodes to form the device of the invention.

Preferably the device comprises a pair of electrodes. The electrodes may both comprise carbon nanotubes and a transition metal oxide (and optionally additional carbon nanomaterials). Alternatively, when more than one electrode is present, the electrodes may be formed from different materials. For example, a first electrode may comprise carbon nanotubes and a transition metal oxide and a second electrode may be a metallic electrode. In this arrangement, typically, the electrode adjacent the substrate is a non-carbon nanomaterial containing electrode. In a further exemplary embodiment, a first electrode may comprise carbon nanotubes and a transition metal oxide, and a second electrode may comprise carbon nanotubes, but no transition metal oxide. In this arrangement, typically, the electrode adjacent the substrate is the second electrode comprising carbon nanotubes, but not the transition metal oxide.

The device preferably comprises a pair of electrodes comprising carbon nanotubes (and optionally further carbon nanomaterials, such as graphite nanoplatelets), wherein at least one electrode comprises a transition metal oxide.

In some embodiments where there are two or more electrodes, there may be one electrode comprising carbon nanotubes and a transition metal oxide, and a second electrode comprising carbon nanotubes but no transition metal oxide. For example, the embodiment, not forming part of the invention, may provide a device for active modification of NIR radiation, the device comprising in order:
(i) a substrate;
(ii) an electrode comprising carbon nanotubes and a transition metal oxide;
(iii) a polymeric permeable membrane comprising an ionic liquid electrolyte;
(iv) an electrode comprising carbon nanotubes; and
(v) a protective encapsulation layer.

In another example, the embodiment, not forming part of the invention, may provide a device for active modification of NIR radiation, the device comprising in order:
(i) a substrate;
(ii) an electrode comprising carbon nanotubes;
(iii) a polymeric permeable membrane comprising an ionic liquid electrolyte;
(iv) an electrode comprising carbon nanotubes and a transition metal oxide; and
(v) a protective encapsulation layer.

In a further example, the embodiment, not forming part of the invention, may provide a device for active modification of NIR radiation, the device comprising in order:
(i) a substrate;
(ii) an electrode comprising carbon nanotubes and a transition metal oxide;
(iii) an electrode comprising carbon nanotubes;
(iv) a polymeric permeable membrane comprising an ionic liquid electrolyte;
(v) an electrode comprising carbon nanotubes; and
(vi) a protective encapsulation layer.

A further example may provide a device for active modification of NIR radiation, the device comprising in order:
(i) a substrate;
(ii) an electrode comprising carbon nanotubes;
(iii) a polymeric permeable membrane comprising an ionic liquid electrolyte;
(iv) an electrode comprising carbon nanotubes;
(v) an electrode comprising carbon nanotubes and a transition metal oxide; and
(vi) a protective encapsulation layer.

Preferably, the electrode adjacent the substate is an electrode which does not comprise a transition metal oxide.

In an alternative embodiment where there are two electrodes, both electrodes may contain a transition metal oxide as well as carbon nanotubes. For example, the embodiment, not forming part of the invention, may provide a device for active modification of NIR radiation, the device comprising in order:
(i) a substrate;
(ii) an electrode comprising carbon nanotubes and a transition metal oxide;
(iii) a polymeric permeable membrane comprising an ionic liquid electrolyte;
(iv) an electrode comprising carbon nanotubes and a transition metal oxide; and
(v) a protective encapsulation layer.

As discussed above, in these examples, the electrode comprising carbon nanotubes and a transition metal oxide may be a "single-layer" electrode containing intimately mixed nanotubes and metal oxide forming a homogenous layer or the electrode may comprise separate, distinct carbon nanotube and transition metal oxide sublayers.

The polymeric permeable membrane is a dielectric material and is therefore electrically insulating. The polymeric membrane is also capable of holding an ionic liquid (in a similar manner to a capacitor or battery device). For example, the polymeric membrane may comprise polyethylene, polypropylene, polyvinylidene fluoride (PVDF), polyimide, cellulose, a cellulose derivative, or a mixture thereof. In preferred embodiments, the polymeric membrane is a polyethylene (PE) membrane, a polypropylene (PP) membrane or a PE/PP membrane.

The ionic liquid is preferably a room temperature ionic liquid. Room temperature ionic liquids (RTIL) are a class of liquids with a low melting point that allow conductivity due to their ionic nature. The ionic liquid preferably has an electrochemical window of (plus/minus) 4V or greater, for example 4.5V or greater.

As noted above, the ionic liquid may be introduced or infused into the polymeric membrane either during or after its production.

In some embodiments, the polymeric membrane is infused with the ionic liquid by first forming a porous polymeric membrane and then applying (e.g. soaking) the ionic liquid into the membrane.

Alternatively, the ionic liquid infused membrane comprises a solid co-cast film of a suitable polymer with an ionic liquid commonly know as a solid polymer electrolyte. To prepare such solid polymer electrolytes, a dielectric polymer and the ionic liquid are dissolved in an appropriate solvent, in which they are both soluble (for example polar, aprotic solvents, such as acetone, DMF or NMP) and then the solvent is removed to form the polymeric layer infused with the ionic liquid.

When the polymeric membrane is co-cast from the polymer and ionic liquid, it may be cast on top of a previously coated layer of the electrode comprising carbon nanotubes. This approach has several advantages. Firstly, this reduces the seepable liquids which could leak from the device. Secondly, the method of device construction can be made simpler by virtue of a multistep coating and encapsulation process. In addition, mechanically, the device is less prone to electrical breakdown through localised stress induced damage.

As the devices described herein may be exposed to the environment in use, they should be able to be operated sufficiently in ambient conditions. Water present in the air is one possible source of detrimental effects due to the low potential window of water to electrolysis (1.23V) as well as material interaction considerations. Accordingly, the ionic liquids are preferably hydrophobic ionic liquids.

Examples of a suitable ionic liquids for use in the devices described herein are diethylmethyl(2-methoxyethyl)ammonium salts, including diethylmethyl(2-methoxyethyl)ammonium bis(trifluoromethylsulfonyl)imide ([DEME][TFSI]) and [DEME][BF₄], as well as 1-ethyl-3-methylimidazlium salts, e.g. EMI-BF₄ and [EMI][TFSI]. Alternatively, the ionic liquid may be a lithium-based ionic liquid (i.e. an ionic liquid wherein the cation is Li⁺), for example LiClO₄ or Li[TFSI].

In the devices described herein, the polymeric permeable membrane typically has a thickness of from 100nm to 100µm, for example from 1µm to 50µm, for example from 1µm to 30µm.

The device may have a laminar structure wherein a sheet (or sheets) of the polymeric membrane is/are sandwiched between the electrode films and the combination of the polymeric membrane(s) and electrode(s) are mounted on a substrate.

The substrate may be comprised of a rigid or flexible planar material which may comprise a continuous organic polymer, silicate based glass or a conductive metallic sheet. The substrate may also be metalised by various means to facilitate an efficient electrode. This substrate may be coated with nanocarbon material to aid industrial production.

Devices may be protected from ambient moisture ingress using a top encapsulation substrate atop the device. This barrier layer may comprise one or more layers of continuous material. Such encapsulation layers may be formed from suitable barrier materials with low absorption characteristics in the IR spectrum, such as poly(ethylene), flexible glass, quartz, sapphire, alkali metal halides, polycarbonates and poly(methyl)methacrylate.

The assembled laminar structure of the polymeric membrane(s) and electrode(s) typically has a thickness of less than 1cm, for example less than 500 microns, or less than 100 microns, or less than 50 microns. The assembled laminar structure typically has a thickness of greater than 5 microns, such as greater than 10 microns. The layers of the laminar structure typically have a surface area of greater than 20cm², typically greater than 100cm².

The device is connectable or connected to a power source, for example a battery. More specifically, a power source is connectable or connected to the electrodes of the device. The potential difference applied across the electrodes by the power source alters the Fermi level of the carbon nanomaterials (e.g. the graphite nanoplatelets) within the electrodes to provide a thermal/NIR camouflaging effect. The potential differences applied across the electrodes can also trigger a metal-to-insulator transition in the transition metal oxides providing a further thermal/NIR camouflaging effect as a result.

The device may also comprise one or more switches or control circuitry for controlling the supply of power to the electrodes or varying the potential difference supplied by the power source to the electrodes of the device.

The device preferably also includes a pair of polymeric permeable membranes to facilitate the manufacture of the device. Using two polymeric membranes, a pair of identical polymeric membranes onto which the carbon nanomaterials have been printed can be assembled together in a symmetric manner to provide a device for active modification of NIR radiation. For example, the device may comprise a pair of polymeric membranes, wherein an electrode has been deposited onto a surface of each of the polymeric membranes. The polymeric membranes can be brought together to form a symmetrical device having a similar structure to a battery or capacitor.

As noted above, the device has a similar structure to a battery or a capacitor. As a result, it is envisaged that the devices described herein could be used as a battery or a capacitor. Accordingly, the embodiment, not forming part of the invention, also provides a capacitor or battery cell comprising:
(i) a substrate;
(ii) one or more polymeric permeable membranes comprising an ionic liquid electrolyte;
(iii) one or more electrodes comprising carbon nanotubes and a transition metal oxide; and
(iv) a protective encapsulation layer.

The device and the layers within the device may have the structure or properties of the device or layers described above in connection with devices for active modification of NIR radiation.

Exemplary embodiments, not forming part of the invention, provide a device for active modification of (e.g. camouflaging) NIR radiation, the device comprising:
(i) one or more polymeric permeable membranes comprising polyethylene, polypropylene, or a mixture thereof comprising an ionic liquid; and
(ii) one or more electrodes comprising carbon nanotubes and a transition metal oxide (and optionally graphite nanoplatelets).

One embodiment, not forming part of the invention, provides a device for active modification of (e.g. camouflaging) NIR radiation, the device comprising:
(i) a pair of polymeric permeable membranes comprising polyethylene, polypropylene, or a mixture thereof comprising an ionic liquid;
(ii) optionally an electrode comprising carbon nanotubes adjacent one and/or both of the polymeric permeable membranes; and
(iii) electrodes comprising carbon nanotubes (and optionally graphite nanoplatelets) deposited onto one surface of each of the polymeric membranes or the electrode comprising carbon nanotubes,
   wherein at least one of the electrodes additionally comprises a transition metal oxide.

In a further aspect, the embodiment, not forming part of the invention, provides a method of making a device as described herein, the method comprising:
(a) optionally depositing a liquid composition comprising carbon nanotubes onto a first and/or second polymeric permeable membrane;
(b) depositing a liquid composition comprising carbon nanotubes and a transition metal oxide (and optionally graphite nanoplatelets) onto at least one of (i) a first and/or second polymeric permeable membranes or (ii) the layer formed in step (a);
(c) impregnating the first and second polymeric membrane with an ionic liquid; and
(d) securing the first and second polymeric membranes to each other.

Alternatively, the polymeric membranes comprising the ionic liquid may be formed before the liquid composition comprising carbon nanomaterials and a transition metal oxide is printed onto the polymeric membrane. Accordingly, the embodiment, not forming part of the invention, also provides a method of making a device as described herein, the method comprising:
(a) forming first and second polymeric permeable membranes comprising an ionic liquid;
(b) optionally depositing a liquid composition comprising carbon nanotubes onto a first and/or second polymeric permeable membrane;
(c) depositing a liquid composition comprising carbon nanotubes and a transition metal oxide (and optionally graphite nanoplatelets) onto at least one of (i) the polymeric membranes or (ii) the later formed in step (a) in order to form a film comprising carbon nanotubes and a transition metal oxide;
(d) securing the first and second polymeric membranes to each other.

As noted above, in a device where there are two or more electrodes, there may be one electrode comprising carbon nanotubes and a transition metal oxide, and a second electrode comprising carbon nanotubes but no transition metal oxide. Therefore, in an embodiment of the invention, not forming part of the invention, there is provided a method of making a device as described herein, the method comprising:
(a) depositing a liquid composition comprising carbon nanotubes onto a first and/or second polymeric permeable membrane;
(b) depositing a liquid composition comprising carbon nanotubes and a transition metal oxide (and optionally graphite nanoplatelets) onto at least one of (i) a first and/or second polymeric permeable membrane or (ii) the layer formed in step (a) in order to form a film comprising carbon nanotubes on the membranes;
(c) impregnating the first and second polymeric membrane with an ionic liquid; and
(d) securing the first and second polymeric membranes to each other.

A further exemplary method of the invention, not forming part of the invention, provides a method of making a device as described herein, the method comprising:
(a) forming first and second polymeric permeable membranes comprising an ionic liquid;
(b) depositing a liquid composition comprising carbon nanotubes onto a first and/or second polymeric permeable membrane;
(c) depositing a liquid composition comprising carbon nanotubes and a transition metal oxide (and optionally graphite nanoplatelets) onto at least one of (i) the polymeric membranes or (ii) the layer formed in step (b) in order to form a film comprising carbon nanotubes and a transition metal oxide;
(d) securing the first and second polymeric membranes to each other.

In alternative embodiments, where there are a pair of electrodes, both electrodes may comprise carbon nanotubes and a transition metal oxide. Accordingly, the embodiment, not forming part of the invention, provides a method of making a device as described herein, the method comprising:
(a) forming first and second polymeric permeable membranes comprising an ionic liquid;
(b) depositing a liquid composition comprising carbon nanotubes and a transition metal oxide (and optionally graphite nanoplatelets) onto both of the first and second polymeric membranes in order to form a film comprising carbon nanotubes and a transition metal oxide;
(c) securing the first and second polymeric membranes to each other.

Instead of preparing coated first and second polymeric membranes and securing them together, the devices of the invention can be prepared by subsequent deposition of layers onto the substrate. Accordingly, in a further aspect, the embodiment, not forming part of the invention, provides a method of making a device as described herein, the method comprising:
(a) providing a substrate;
(b) depositing a first liquid composition comprising carbon nanotubes (and optionally graphite nanoplatelets) onto the substrate to form a first electrode;
(c) optionally depositing a second liquid composition comprising carbon nanotubes onto the first electrode;
(d) depositing a liquid comprising a polymer and an ionic liquid onto the first electrode or layer formed in step (c) to form a polymeric permeable membrane comprising the ionic liquid;
(e) optionally depositing a further second liquid composition comprising carbon nanotubes onto the polymeric permeable membrane; and
(f) depositing a third liquid composition comprising carbon nanotubes (and optionally graphite nanoplatelets onto the polymeric permeable membrane or layer formed in step (e) to form a second electrode;
wherein the first and/or the third liquid composition additionally comprises a transition metal oxide.

As noted above, in an embodiment where there are two or more electrodes present, there may be one electrode comprising carbon nanotubes and a transition metal oxide, and a second electrode comprising carbon nanotubes but no transition metal oxide. Accordingly, the invention provides a method of making a device as described herein, the method comprising:
(a) providing a substrate;
(b) depositing a first liquid composition comprising carbon nanotubes (and optionally graphite nanoplatelets) onto the substrate to form a first electrode;
(c) depositing a liquid comprising a polymer and an ionic liquid onto the first electrode to form a polymeric permeable membrane comprising the ionic liquid; and
(d) depositing a second liquid composition comprising carbon nanotubes and a transition metal oxide (and optionally graphite nanoplatelets) onto the polymeric permeable membrane to form a second electrode.

In a further example, the invention provides a method of making a device as described herein, the method comprising:
(a) providing a substrate;
(b) depositing a first liquid composition comprising carbon nanotubes and a transition metal oxide (and optionally graphite nanoplatelets) onto the substrate to form a first electrode;
(c) depositing a liquid comprising a polymer and an ionic liquid onto the first electrode to form a polymeric permeable membrane comprising the ionic liquid; and
(d) depositing a second liquid composition comprising carbon nanotubes (and optionally graphite nanoplatelets) onto the polymeric permeable membrane to form a second electrode.

A further exemplary embodiment, not forming part of the invention, provides a method of making a device as described herein, the method comprising:
(a) providing a substrate;
(b) depositing a first liquid composition comprising carbon nanotubes (and optionally graphite nanoplatelets) onto the substrate to form a first electrode;
(c) depositing a liquid comprising a polymer and an ionic liquid onto the first electrode to form a polymeric permeable membrane comprising the ionic liquid;
(d) depositing a second liquid composition comprising carbon nanotubes (and optionally graphite nanoplatelets) onto the polymeric permeable membrane; and
(e) depositing a third liquid composition comprising carbon nanotubes and a transition metal oxide (and optionally graphite nanoplatelets) onto the polymeric permeable membrane to form a second electrode.

A further embodiment, not forming part of the invention, provides a method of making a device as described herein, the method comprising:
(a) providing a substrate;
(b) depositing a first liquid composition comprising carbon nanotubes and a transition metal oxide (and optionally graphite nanoplatelets) onto the substrate to form a first electrode;
(c) depositing a second liquid composition comprising carbon nanotubes (and optionally graphite nanoplatelets) onto the first electrode;
(d) depositing a liquid comprising a polymer and an ionic liquid onto the first electrode to form a polymeric permeable membrane comprising the ionic liquid;
(e) depositing a third liquid composition comprising carbon nanotubes (and optionally graphite nanoplatelets) onto the polymeric permeable membrane to form a second electrode.

In an alternative embodiment where there are a pair of electrodes present, both electrodes may comprise carbon nanotubes and a transition metal oxide. Accordingly, the embodiment, not forming part of the invention, provides a method of making a device as described herein, the method comprising:
(a) providing a substrate;
(b) depositing a first liquid composition comprising carbon nanotubes and a transition metal oxide (and optionally graphite nanoplatelets) onto the substrate to form a first electrode;
(c) depositing a liquid comprising a polymer and an ionic liquid onto the first electrode to form a polymeric permeable membrane comprising the ionic liquid; and
(d) depositing a third liquid composition comprising carbon nanotubes and a transition metal oxide (and optionally graphite nanoplatelets) onto the polymeric permeable membrane to form a second electrode.

The liquid compositions in steps b)-f) typically further comprise a solvent (as described above). Accordingly, the method may also comprise allowing the solvent to evaporate after deposition of a liquid composition, but prior to the deposition of the next liquid composition.

It will be appreciated that this method is suitable for devices wherein the polymeric permeable layer is formed by co-casting the polymer with the ionic liquid (rather than impregnating the polymer, once formed into a membrane, with the ionic liquid).

As discussed above, the carbon nanotubes and transition metal oxides may be present in the electrode as separate, distinct layers, rather than being formed from a single liquid composition comprising both. Therefore, in the method embodiments described above the step of "depositing a liquid composition comprising carbon nanotubes and a transition metal oxide" may be replaced with the following steps: i) "depositing a liquid composition comprising carbon nanotubes" and ii) "depositing a liquid composition comprising a transition metal oxide" or vice versa.

The liquid compositions comprising carbon nanomaterials and the polymeric membranes used in these methods may have the properties or features of the compositions and membranes described with reference to the devices disclosed herein.

Preferably the liquid composition comprising carbon nanomaterials is deposited (e.g. printed) onto both the polymeric membranes or substrate.

When the method comprises securing the first and second polymeric membranes to each other, the polymeric membranes are typically secured together so that uncoated surfaces of the two polymeric membranes (i.e. surfaces of the membranes that have not had a carbon nanomaterial-containing liquid composition deposited onto them) are in contact with each other.

The deposition steps may be conducted by spraying or printing the liquid composition onto the polymeric membrane. A wide variety of printing techniques can be used including screen printing, flexographic, offset lithographic, slot-die coating, doctor blade coating or inkjet printing.

Impregnation steps may be conducted by applying the ionic liquid to the surface of the polymeric membrane and applying a vacuum.

The methods above may also comprise the steps of securing the first and second polymeric membranes to a substrate and/or applying a protective encapsulation layer to the polymeric membranes.

The methods may include the step of obtaining a liquid composition, wherein the liquid composition comprises single-walled carbon nanotubes and a transition metal oxide and optionally graphite nanoplatelets. Accordingly, prior to step a) above, the method may comprise the following steps:
(i) optionally obtaining exfoliated graphite nanoplatelets;
(ii) obtaining exfoliated single-walled carbon nanotubes;
(iii) obtaining a transition metal oxide; and
(iv) dispersing the exfoliated single walled-carbon nanotubes, transition metal oxide, a thickening agent and optionally a surfactant and optionally the exfoliated graphite nanoplatelets, in a solvent.

To ensure homogenous mixing of the components, the mixture in step iii) may be subjected to a high shear mixing stage. In addition, a further step of compressing (e.g. roll milling) the ink may take place to degas the ink. This facilitates printing of the inks onto membranes.

The invention also provides devices obtained according to the methods described herein. The invention also provides a method of camouflaging/concealing NIR/thermal radiation from an object, the method comprising placing a device as described herein between the object and an NIR/thermal radiation detector.

The invention can be used in a wide range of applications where modulation of IR radiation is required. This includes thermal management of objects where convention and/or conduction are not feasible, for example in electronic components in outer space. In addition, as noted above, the devices of the invention may be useful in thermal windows and emissive temperature control.

### Brief Description of the Drawings

Figure 1 illustrates the principle of Pauli Blocking to modify the band structure of graphene to block state transitions.
Figure 2 is a schematic diagram showing the respective width, length and thickness of layered nanoplatelets.
Figures 3 and 4 show scanning electron microscopy (SEM) images of the printed inks described in Example 2 below.
Figure 5A schematically shows the construction of a device according to one embodiment of the invention.
Figure 5B schematically shows the construction of a device according to a further embodiment of the invention and shows a substrate and protective encapsulation layer.
Figures 6A and 6B show two exemplary devices of the invention.
Figures 7A to 7C show alternative constructions of the device.
Figures 8A and 8B show a plot of current against potential difference for a device containing CNT-electrodes and one wherein VO₂ has been sprayed onto the electrode to provide electrical contact.

### Examples

### Example 1 - Exfoliation of Graphite to form Nanoparticulate Graphite

Graphite flakes were exfoliated using the apparatus and process described in International Patent Application No. WO 2020/074698 (PCT/EP2019/077579) to obtain nanoparticulate graphite with a distribution of lateral sizes of on average approximately 1µm and an average thickness of approximately 10 layers.

In summary, fine graphite powder (1-50 µm flake sizes produced by air classification of milled powder) was dispersed into a surfactant-water system and added to the inlet reservoir of a high-pressure homogeniser (such as the apparatus described in International Patent Application No. WO 2020/074698 (PCT/EP2019/077579)). The fluid was then pressurised and accelerated under decompression before exiting the process cell of the homogeniser into a heat exchanger. Once the fluid was cooled to a temperature maintained by an external chiller system, it was either collected or recirculated, depending on the system configuration.

Once the graphite had been processed, the exfoliated mixture was centrifuged at 5000 g for 20 minutes to remove all unexfoliated crystallites and larger fragments. These parameters sedimented all but the few-layer nanosheets (i.e. the nanoparticular graphite) present. The nanoparticulate graphite obtained had a distribution of lateral sizes and thicknesses ranging from 50 to 2000 nm and up to ~20 nm respectively.

### Example 2 - Electrode Ink Formulations comprising carbon nanotubes

The composition is given in the table below for a batch of an ink prepared. The total solids content of the prepared ink (including binders etc.) was approximately 3.7wt%.

| **Material** | **Mass (g)** | **Fraction of dry film (wt%)** |
|---|---|---|
| Nanoparticulate Graphite (obtained as described in Example 1) | 3.10 | 40 |
| Single-Walled Carbon Nanotubes (Tuball Batt-H2O SWCNTs supplied by OCSiAl) | 1.54 | 20 |
| Carboxymethylcellulose (sodium salt) | 2.70 | 34 |
| Triton X-100 | 0.50 | 6 |

To make the ink, the components were weighed into a suitable container. In order to sufficiently lower the viscosity to blend the components, the mixture was heated under mixing (hotplate at 60°C) using a Silverson L5M-A laboratory high-shear mixer, operating at 5000 rpm. The mixture was then mixed for 5 minutes.

The graphite nanoplatelets have a distribution of lateral sizes of from 50nm to 800nm and have thicknesses of up to around 20nm. The viscosity of the ink was measured over a shear rate of 0.1/s to 100/s and the inks were found to be thixotropic.

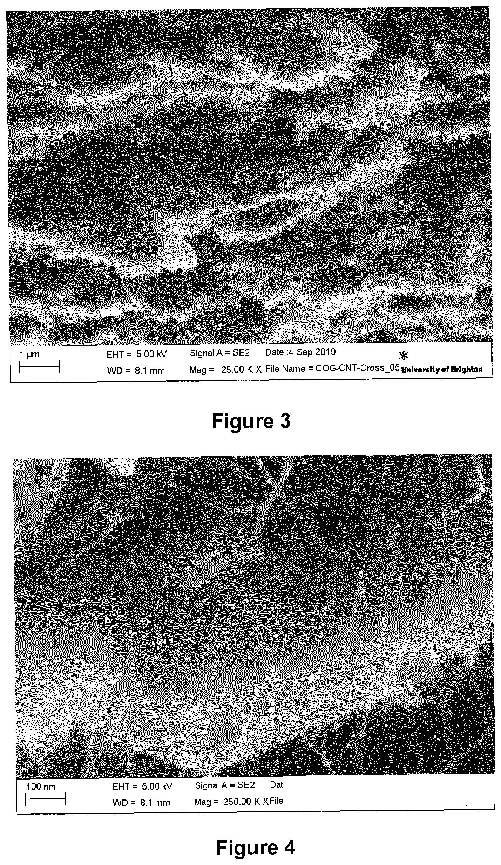

Structural characterisation was performed by SEM, indicating that there is a dense network of carbon nanotubes that exists in the interstitial spaces between packed graphite nanoplatelets (see Figures 3 and 4).

The inks were successfully printed on a range of substrates including several grades of polyethylene terephthalate (PET) substrate (DuPont Tejin ST504 & Felix Scholler F40100) and paper substrates.

### Example 3 - Electrode Ink formulation comprising carbon nanotubes and a transition metal oxide

The composition is given in the table below for a batch of an ink. The total solids content of the ink (including binders etc.) is approximately 3.7wt%.

| **Material** | **Mass (g)** | **Fraction of dry film (wt%)** |
|---|---|---|
| Single-Walled Carbon Nanotubes (Tuball Batt-H2O SWCNTs supplied by OCSiAl) | 1.54 | 19.6 |
| V₂O₅ (Sigma Aldrich) | 3.08 | 39.3 |
| Carboxymethylcellulose (sodium salt) | 2.70 | 3.4 |
| Triton X-100 | 0.50 | 6.4 |

To make the ink, the components are weighed into a suitable container. In order to sufficiently lower the viscosity to blend the components, the mixture is heated under mixing (hotplate at 60°C) using a Silverson L5M-A laboratory high-shear mixer, operating at 5000 rpm. The mixture is then mixed for 5 minutes.

The graphite nanoplatelets have a distribution of lateral sizes of from 50nm to 800nm and have thicknesses of up to around 20nm.

The vanadium oxide is obtained from Sigma Aldrich and processed by liquid phase exfoliation to produce a population of nanomaterials with typical D₅₀ of less than 10 microns.

### Example 4 - Film Deposition and Device Assembly

The carbon nanotube-containing ink of Example 2 is diluted by a factor of 20 to enable spray deposition. The diluted ink is sprayed onto a PE/PP Celgard membrane (2340) infiltrated with an ionic liquid.

200µL/cm² of the ionic liquid, diethylmethyl(2-methoxyethyl)ammonium bis(trifluoromethylsulfonyl)imide, [DEME][TFSI], is infiltrated into the Celgard membrane by pipetting the ionic liquid onto the surface of the membrane and leaving at 100bar for 30minutes.

Alternatively, polyethylene membranes were infiltrated with [DEME][TSFI] by adding 100µL per cm² and allowing to soak for 10 minutes. The membranes are then subjected to rolling compression to remove any excess ionic liquid. Single-walled carbon nanotubes dispersions (described in Example 2) are then sprayed with an airbrush at 3 bar at a distance of 15 cm through an appropriate stencil to form an electrode having a thickness of approximately 20nm. This is done on a hotplate at 90°C.

The same process is repeated using the carbon nanotube and vanadium oxide-containing inks of Example 3 to form a polyethylene membrane coated with a carbon nanotube- and vanadium oxide-containing electrode.

The film thickness is measured via SEM cross-sectional analysis or scanning probe profilometry and the conductivity and thickness are used to calculate the specific conductivity. The conductivities of the printed films are measured using a four-point probe, in accordance with International Electrotechnical Commission standard IEC TS 62607-2-1:2012.

The device is then assembled by layering 2 films, one with a carbon nanotube-containing electrode and the other with a carbon nanotube and vanadium oxide-containing electrode, such that the printed, carbon-containing films have a pair of ionic liquid infiltrated Celgard membranes separating the two electrodes.

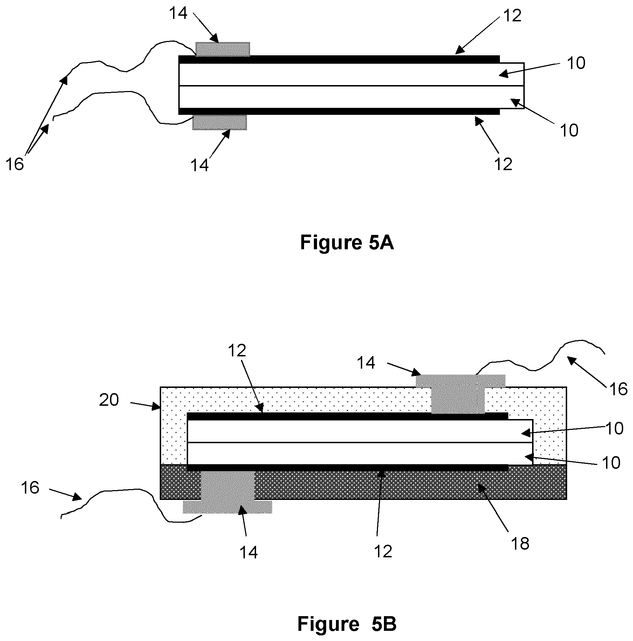

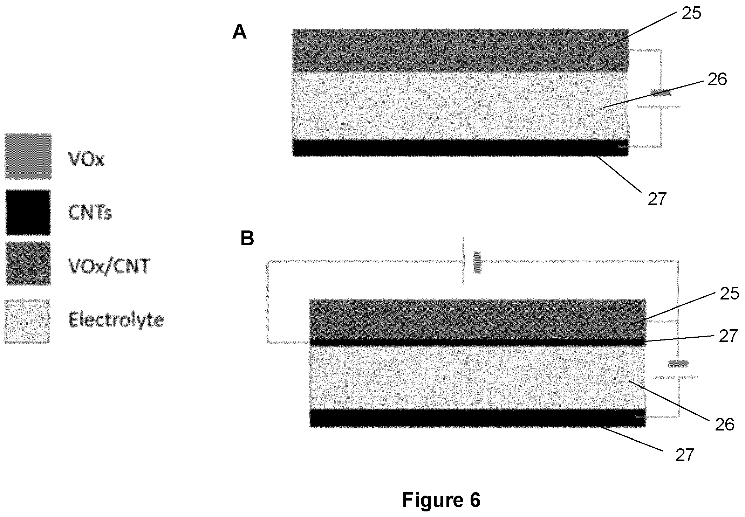

The structure of the device is shown schematically in Figures 5A and 6A. The device comprises a pair of ionic liquid infiltrated Celgard membranes (10). On one side of each membrane is a film (12) printed from the ink described in Example 2 or 3. These printed films act as electrodes for the device. Electrical contacts were made with the electrodes using copper tape (14) and were connected to a voltage source by wires (16).

The structure of an alternate device, which comprises a substrate and a LDPE, IR-transparent protective layer, is shown in Figure 5B. The structure of the device in Figure 5B comprises an arrangement substantially as shown in Figure 5A. However, the device also comprises a PET substrate (18) and a protective encapsulation layer (20) formed from LDPE (low density polyethylene). Copper connectors (14) penetrate through the substrate (18) and protective layer (20) to allow for connection of the electrodes (12) to an external voltage/power source via wires (16).

Figure 6B shows an alternative embodiment comprising three electrodes, wherein an electrode printed from an ink containing carbon nanotubes is adjacent each side of the polymeric membrane structure and on one of these electrodes is printed a further electrode from an ink comprising carbon nanotubes and a transition metal oxide (e.g. an ink as described in Example 3).

### Example 5 - Device made from co-cast ionic liquid-infused polymeric membrane

In a further example, a carbon nanotube-containing ink is prepared as described in Example 2. The carbon nanotube dispersion is diluted by a factor of 10 in deionised water and sonicated in a bath for 10 minutes to form a sprayable ink.

The ink is then sprayed with an airbrush at 3 bar at a distance of 15 cm through an appropriate stencil to form a carbon nanotube-containing electrode layer. This is done on a hotplate at 90°C.

A polymeric membrane is formed on top of the carbon nanotube-containing electrode layer by cocasting poly(vinylidene fluoride-co-hexafluoropropylene) (PVDF-HFP) with the ionic liquid [EMI][TMSI] to form a membrane having a thickness of 30µm. To achieve this, a solid electrolyte precursor liquid comprising 1.94% (w/w) PVDF-HFP, 2.91% (w/w) [EMI][TFSI] and 95.15% (w/w) of acetone is dropcast at 200µL per cm² onto the carbon nanotube-containing electrode later. The solvent is allowed to evaporate to leave a membrane comprising 60% [EMI][TSFI] and 40% PVDF-HDP.

A second ink either prepared in accordance with Example 3 or prepared from 0.4 wt% single walled carbon nanotubes, 3.6% vanadium oxide (e.g. VO₂), 0.4 wt% in water with 0.8 wt% sodium carboxymethyl cellulose, as purchased from OCSiAl. The carbon nanotube and vanadium oxide dispersion is diluted by a factor of 10 in deionised water and sonicated in a bath for 10 minutes to form a sprayable ink. The second ink is then sprayed with an airbrush at 3 bar at a distance of 15 cm through an appropriate stencil to form a carbon nanotube-containing electrode layer to form a carbon nanotube and vanadium oxide-containing electrode layer. This is done on a hotplate at 90°C.

The device is then constructed in an analogous manner to the device described in Example 4 above.

### Example 6 - Exemplary Devices of the Invention

Figure 6A shows a device according to the invention with a first electrode layer 25 comprising a composite of carbon nanotubes and a vanadium oxide, adjacent an electrolyte 26, which in turn is adjacent a second electrode layer 27 comprising carbon nanotubes but no vanadium oxide.

Figure 6B shows a further device according to the invention comprising a first electrode layer 25 comprising a composite of carbon nanotubes and a vanadium oxide, adjacent a second electrode layer 27 comprising carbon nanotubes but no vanadium oxide, which is adjacent to an electrolyte 26, which in turn is adjacent a second electrode layer 27 comprising carbon nanotubes but no vanadium oxide.

It is anticipated that the exemplary devices shown in Figures 6A and 6B will provide levels of NIR signature control in real time.

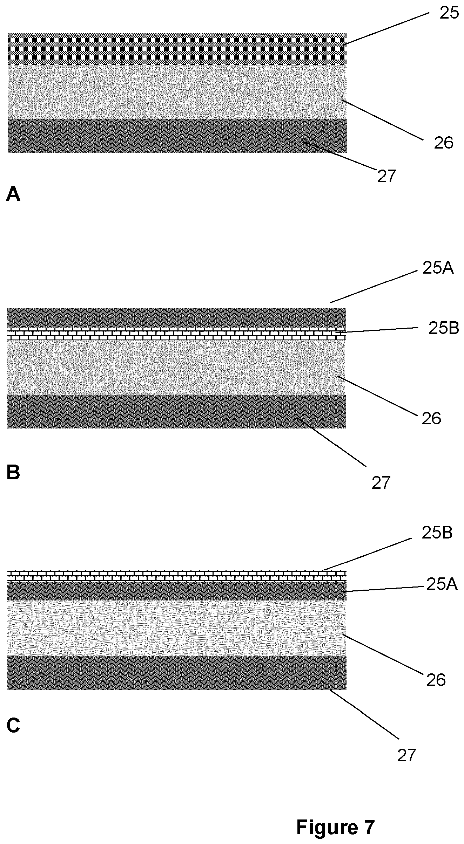

Figures 7A to 7C show further devices according to the invention. The device in Figure 7A comprises a first electrode layer 25 comprising an intimately mixed composite of carbon nanotubes and a vanadium oxide, adjacent an electrolyte 26, which in turn is adjacent a second electrode layer 27 comprising carbon nanotubes but no vanadium oxide.

In Figures 7B and 7C, the electrode comprising both carbon nanotubes and vanadium oxide comprise sublayers of each material. Accordingly, in the device shown in Figures 7B and 7C, there is a first electrode layer comprising a layer of carbon nanotubes 25A and separate layer of a vanadium oxide 25B, which together form an electrode. This electrode is adjacent to an electrolyte 26, which in turn is adjacent a second electrode layer 27 comprising carbon nanotubes but no vanadium oxide. In Figure 7B, the vanadium oxide sublayer 25B of the electrode is adjacent the electrolyte 26, whereas in Figure 7C, the carbon nanotube sublayer 25A is adjacent the electrolyte 26.

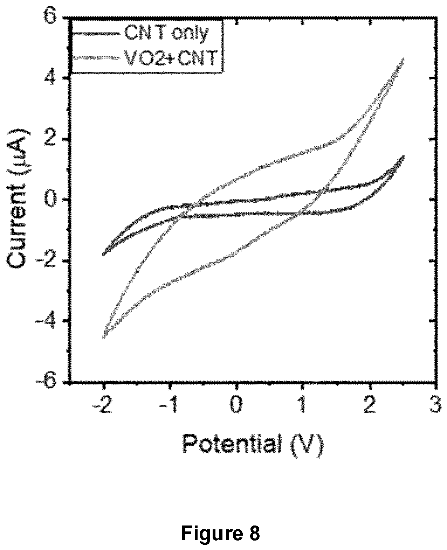

Figure 8A shows a plot of current against potential difference for a device containing CNT-only electrodes and one wherein VO₂ has been sprayed onto the surface of one of the electrodes to provide electrical contact (corresponding to the device shown schematically in Figure 7C). In this device, the ionic liquid used was a 1:1 ratio of [EMIM][TFSI] and PVDF-co-HFP. The plot shows electrochemical charge storage between -2V and 2V.

## Claims

1. A device for active modification of Near-Infrared radiation, the device comprising:
(i) a substrate (18);
(ii) one or more polymeric permeable membranes (10) comprising an ionic liquid electrolyte;
(iii) two or more electrodes (12) comprising carbon nanotubes, wherein at least one electrode further comprises a transition metal oxide which displays a metal-to-insulator transition in the region of from 780 nm to 2500 nm, and wherein the two or more electrodes are deposited onto the surface of at least one of the one or more polymeric membranes; and
(iv) a protective encapsulation layer (20).

2. A device according to claim 1 wherein the transition metal oxide is selected from a vanadium oxide (VOx), niobium oxide (NbOx), hafnium oxide (HfOx), cobalt oxide (CoOx), molybdenum oxide (MoOx) and titanium oxide (TiOx), wherein x is an integer or non-integer value from 1 to 5.

3. A device according to claim 1 or claim 2 wherein the electrode(s) (12) comprise(s) a first sublayer comprising the carbon nanotubes and a second sublayer comprising the transition metal oxide.

4. A device according to any one of claims 1 to 3 wherein the two or more electrodes (12) further comprise graphite nanoplatelets.

5. A device according to any preceding claim, wherein the carbon nanotubes and transition metal oxide are present in the electrode(s) (12) in a weight ratio of from 2:98 to 2:8 (carbon nanotubes:transition metal oxide).

6. A device according to any preceding claim wherein the polymeric membrane(s) (10) is/are disposed between a pair of electrodes (12).

7. A device according to claim 6 wherein one of the electrodes (12) comprises carbon nanotubes and a transition metal oxide, and the other electrode comprises carbon nanotubes but no transition metal oxide.

8. A device according to any preceding claim, comprising single-walled carbon nanotubes, optionally having a mean diameter of from 1 nm to 5 nm and/or a length of greater than 3 µm.

9. A device according to any preceding claim, wherein the electrodes (12) further comprise a thickening agent, for example carboxymethylcellulose.

10. A device according to any preceding claim, wherein the polymeric membrane (10) comprises polyethylene, polypropylene or a mixture thereof.

11. A device according to any preceding claim, wherein the ionic liquid has an electrochemical window of 4 V or greater.

12. A device according to any preceding claim which is connectable or connected to a power source.

13. A method of making a device according to any one of claims 1 to 12, the method comprising:
(a) providing a substrate (18);
(b) depositing a first liquid composition comprising carbon nanotubes (and optionally graphite nanoplatelets) onto the substrate to form a first electrode (12);
(c) depositing a liquid comprising a polymer and an ionic liquid onto the first electrode (12) to form a polymeric permeable membrane (10) comprising the ionic liquid: and
(d) depositing a second liquid composition comprising carbon nanotubes and a transition metal oxide (and optionally graphite nanoplatelets) onto the polymeric permeable membrane (10) to form a second electrode (12).

14. A method of making a device according to any one of claims 1 to 12, the method comprising:
(a) providing a substrate (18);
(b) depositing a first liquid composition comprising carbon nanotubes and a transition metal oxide (and optionally graphite nanoplatelets) onto the substrate to form a first electrode (12);
(c) depositing a liquid comprising a polymer and an ionic liquid onto the first electrode (12) to form a polymeric permeable membrane (10) comprising the ionic liquid: and
(d) depositing a second liquid composition comprising carbon nanotubes (and optionally graphite nanoplatelets) onto the polymeric permeable membrane (10) to form a second electrode (12).

15. A method of camouflaging/concealing Near-Infrared radiation from an object, the method comprising placing a device according to any one of claims 1 to 12 between the object and a Near-Infrared detector.

## Patentansprüche

1. Gerät zur aktiven Modifikation von Nahinfrarotstrahlung, wobei das Gerät Folgendes umfasst:
(i) ein Substrat (18);
(ii) eine oder mehrere permeable Polymermembranen (10), die einen ionischen flüssigen Elektrolyten umfassen;
(iii) zwei oder mehr Elektroden (12), die Kohlenstoffnanoröhren umfassen, wobei mindestens eine Elektrode ferner ein Übergangsmetalloxid umfasst, das einen Metall-zu-Isolator-Übergang im Bereich von 780 nm bis 2500 nm zeigt,
und wobei die zwei oder mehr Elektroden auf der Oberfläche mindestens einer der einen oder mehr Polymermembranen abgeschieden sind; und
(iv) eine schützende Verkapselungsschicht (20).

2. Gerät nach Anspruch 1, wobei das Übergangsmetalloxid ausgewählt ist aus einem Vanadiumoxid (VOx), Nioboxid (NbOx), Hafniumoxid (HfOx), Kobaltoxid (CoOx), Molybdänoxid (MoOx) und Titanoxid (TiOx), wobei x ein ganzzahliger oder nicht ganzzahliger Wert von 1 bis 5 ist.

3. Gerät nach Anspruch 1 oder Anspruch 2, wobei die Elektrode(n) (12) eine erste Unterschicht, die die Kohlenstoffnanoröhren umfasst, und eine zweite Unterschicht, die das Übergangsmetalloxid umfasst, umfasst/umfassen.

4. Gerät nach einem der Ansprüche 1 bis 3, wobei die zwei oder mehr Elektroden (12) ferner Graphit-Nanoplättchen umfassen.

5. Gerät nach einem vorhergehenden Anspruch, wobei die Kohlenstoffnanoröhren und das Übergangsmetalloxid in der/den Elektrode(n) (12) in einem Gewichtsverhältnis von 2:98 bis 2:8 (Kohlenstoffnanoröhren:Übergangsmetalloxid) vorhanden sind.

6. Gerät nach einem vorhergehenden Anspruch, wobei die Polymermembran(en) (10) zwischen einem Paar von Elektroden (12) angeordnet ist/sind.

7. Gerät nach Anspruch 6, wobei eine der Elektroden (12) Kohlenstoffnanoröhren und ein Übergangsmetalloxid umfasst und die andere Elektrode Kohlenstoffnanoröhren, aber kein Übergangsmetalloxid umfasst.

8. Gerät nach einem vorhergehenden Anspruch, umfassend einwandige Kohlenstoffnanoröhren, die optional einen mittleren Durchmesser von 1 nm bis 5 nm und/oder einer Länge von größer als 3 µm aufweisen.

9. Gerät nach einem vorhergehenden Anspruch, wobei die Elektroden (12) ferner ein Verdickungsmittel, zum Beispiel Carboxymethylcellulose, umfassen.

10. Gerät nach einem vorhergehenden Anspruch, wobei die Polymermembran (10) Polyethylen, Polypropylen oder ein Gemisch davon umfasst.

11. Gerät nach einem vorhergehenden Anspruch, wobei die ionische Flüssigkeit ein elektrochemisches Fenster von 4 V oder mehr aufweist.

12. Gerät nach einem vorhergehenden Anspruch, das an eine Stromquelle anschließbar oder angeschlossen ist.

13. Verfahren zur Herstellung eines Geräts nach einem der Ansprüche 1 bis 12, wobei das Verfahren Folgendes umfasst:
(a) Bereitstellen eines Substrats (18);
(b) Abscheiden einer ersten flüssigen Zusammensetzung, die Kohlenstoffnanoröhren (und optional Graphit-Nanoplättchen) umfasst, auf dem Substrat, um eine erste Elektrode (12) zu bilden;
(c) Abscheiden einer Flüssigkeit, die ein Polymer und eine ionische Flüssigkeit umfasst, auf der ersten Elektrode (12), um eine permeable Polymermembran (10) zu bilden, die die ionische Flüssigkeit umfasst;
und
(d) Abscheiden einer zweiten flüssigen Zusammensetzung, die Kohlenstoffnanoröhren und ein Übergangsmetalloxid (und optional Graphit-Nanoplättchen) umfasst, auf der permeablen Polymermembran (10), um eine zweite Elektrode (12) zu bilden.

14. Verfahren zur Herstellung eines Geräts nach einem der Ansprüche 1 bis 12, wobei das Verfahren Folgendes umfasst:
(a) Bereitstellen eines Substrats (18);
(b) Abscheiden einer ersten flüssigen Zusammensetzung, die Kohlenstoffnanoröhren und ein Übergangsmetalloxid (und optional Graphit-Nanoplättchen) umfasst, auf dem Substrat, um eine erste Elektrode (12) zu bilden;
(c) Abscheiden einer Flüssigkeit, die ein Polymer und eine ionische Flüssigkeit umfasst, auf der ersten Elektrode (12), um eine permeable Polymermembran (10) zu bilden, die die ionische Flüssigkeit umfasst;
und
(d) Abscheiden einer zweiten flüssigen Zusammensetzung, die Kohlenstoffnanoröhren (und optional Graphit-Nanoplättchen) umfasst, auf der permeablen Polymermembran (10), um eine zweite Elektrode (12) zu bilden.

15. Verfahren zum Tarnen/Verbergen von Nahinfrarotstrahlung aus einem Objekt, wobei das Verfahren das Platzieren eines Geräts nach einem der Ansprüche 1 bis 12 zwischen dem Objekt und einem Nahinfrarotdetektor umfasst.

## Revendications

1. Dispositif pour la modification active d'un rayonnement dans le proche infrarouge, le dispositif comprenant :
(i) un substrat (18) ;
(ii) une ou plusieurs membranes polymères perméables (10) comprenant un électrolyte liquide ionique ;
(iii) deux électrodes ou plus (12) comprenant des nanotubes de carbone, dans lequel au moins une électrode comprend en outre un oxyde de métal de transition qui affiche une transition métal-isolant dans la région de 780 nm à 2 500 nm,
et dans lequel les deux électrodes ou plus sont déposées sur la surface d'au moins l'une des une ou plusieurs membranes polymères ; et
(iv) une couche d'encapsulation protectrice (20).

2. Dispositif selon la revendication 1, dans lequel l'oxyde de métal de transition est choisi parmi un oxyde de vanadium (VOx), un oxyde de niobium (NbOx), un oxyde de hafnium (HfOx), un oxyde de cobalt (CoOx), un oxyde de molybdène (MoOx) et un oxyde de titane (TiOx), dans lequel x est une valeur entière ou non entière de 1 à 5.

3. Dispositif selon la revendication 1 ou la revendication 2, dans lequel la ou les électrodes (12) comprennent une première sous-couche comprenant les nanotubes de carbone et une seconde sous-couche comprenant l'oxyde de métal de transition.

4. Dispositif selon l'une quelconque des revendications 1 à 3, dans lequel les deux électrodes ou plus (12) comprennent en outre des nanoplaquettes de graphite.

5. Dispositif selon une quelconque revendication précédente, dans lequel les nanotubes de carbone et l'oxyde de métal de transition sont présents dans la ou les électrodes (12) dans un rapport pondéral de 2:98 à 2:8 (nanotubes de carbone:oxyde de métal de transition).

6. Dispositif selon une quelconque revendication précédente, dans lequel la ou les membranes polymères est/sont disposées entre une paire d'électrodes (12).

7. Dispositif selon la revendication 6, dans lequel une des électrodes (12) comprend des nanotubes de carbone et un oxyde de métal de transition, et l'autre électrode comprend des nanotubes de carbone mais pas d'oxyde de métal de transition.

8. Dispositif selon une quelconque revendication précédente, comprenant des nanotubes de carbone à paroi unique, présentant éventuellement un diamètre moyen de 1 nm à 5 nm et/ou une longueur supérieure à 3 µm.

9. Dispositif selon une quelconque revendication précédente, dans lequel les électrodes (12) comprennent en outre un agent épaississant, par exemple de la carboxyméthylcellulose.

10. Dispositif selon une quelconque revendication précédente, dans lequel la membrane polymère (10) comprend du polyéthylène, du polypropylène ou un mélange de ceux-ci.

11. Dispositif selon une quelconque revendication précédente, dans lequel le liquide ionique présente une fenêtre électrochimique de 4 V ou plus.

12. Dispositif selon une quelconque revendication précédente, qui peut être connecté ou est connecté à une source d'alimentation.

13. Procédé de fabrication d'un dispositif selon l'une quelconque des revendications 1 à 12, le procédé comprenant :
(a) la fourniture d'un substrat (18) ;
(b) le dépôt d'une première composition liquide comprenant des nanotubes de carbone (et éventuellement des nanoplaquettes de graphite) sur le substrat pour former une première électrode (12) ;
(c) le dépôt d'un liquide comprenant un polymère et un liquide ionique sur la première électrode (12) pour former une membrane polymère perméable (10) comprenant le liquide ionique ; et
(d) le dépôt d'une seconde composition liquide comprenant des nanotubes de carbone et un oxyde de métal de transition (et éventuellement des nanoplaquettes de graphite) sur la membrane perméable polymère (10) pour former une seconde électrode (12).

14. Procédé de fabrication d'un dispositif selon l'une quelconque des revendications 1 à 12, le procédé comprenant :
(a) la fourniture d'un substrat (18) ;
(b) le dépôt d'une première composition liquide comprenant des nanotubes de carbone et un oxyde de métal de transition (et éventuellement des nanoplaquettes de graphite) sur le substrat pour former une première électrode (12) ;
(c) le dépôt d'un liquide comprenant un polymère et un liquide ionique sur la première électrode (12) pour former une membrane polymère perméable (10) comprenant le liquide ionique ; et
(d) le dépôt d'une seconde composition liquide comprenant des nanotubes de carbone (et éventuellement des nanoplaquettes de graphite) sur la membrane polymère perméable (10) pour former une seconde électrode (12).

15. Procédé de camouflage/dissimulation d'un rayonnement proche infrarouge d'un objet, le procédé comprenant le placement d'un dispositif selon l'une quelconque des revendications 1 à 12 entre l'objet et un détecteur de proche infrarouge.
